# EUROPEAN PATENT APPLICATION

(11) **EP 3 910 499 A1**
(43) Date of publication of application: **17.11.2021**
(21) Application number: 21173736.6
(22) Date of filing: 13.05.2021
(51) Int. Cl.: G06F 16/907

(54) **METHODS AND SYSTEMS FOR CLOUD COMPUTING**

(30) Priority: 13.05.2020 GB 202007024
(71) Applicant: The Secretary of State for Foreign, Commonwealth and Development Affairs, acting through The Government Communication Headquarters (GCHQ), Cheltenham GL51 0EX (GB)
(72) Inventor:
(74) Representative: Phillips, Thomas Edward

(57) **Abstract**

A data handling system and method for managing a data structure in a data store, in which a data store contains sorted data, and a metadata contains status information associated with the sorted data. A job creator is provided comprising at least one job definition queue, the job creator being configured to review the metadata store for status information satisfying a predetermined criteria, wherein on satisfying such a predetermined criteria the job creator subsequently creates a job to be executed, and allocates the job to the at least one job definition queue. A compute resource service module enables job execution of the allocated job so as to modify data structure in the data store. The job execution capability of the data handling system is scalable in dependence upon the number of allocated jobs to be executed.

## Description

The present invention relates to the provision of a cloud-native, serverless system suitable for handling Big Data. In particular the present invention relates to providing a means of storing data and searching for stored data in an efficient, updatable, cost-effective manner.

With the escalating use of the internet and data-rich services increasingly large amounts of data are being generated and stored in vast data centres and data storage services, such as Amazon® S3, the Apple® iCloud®, Google® Colossus® and IBM® Cloud Storage. The expectation is for such data to be instantly available on demand and readily queryable to provide high quality reporting, monitoring, dashboarding and analytics services and enable ad-hoc querying. Such services can require both huge amounts of storage and enormous compute power, with users expecting accurate and complete results with minimum latency. It is becoming more common for cloud storage solutions to host the data rather than to store the data on local servers or hard drives.

Various solutions have been put forward which store data sorted by key-value pairs. Google's® BigTable® is one such example whereby data is organised into a multi-dimensional sorted map, indexed by a row key, a column key and a timestamp. The table is ordered based on the row key, and automatically partitioned such that similar row keys are stored together in tablets on a file storage system. Searches based on similar row keys are therefore very efficient, since only a few machines may need to be searched. This provides a readily scalable model with the ability to handle a large variety of workloads.

Many sorted data arrangement solutions have been put forward to provide the ability to ingest, maintain and use the data. Amazon's Web Service (AWS®) is one such example, which provides various storage solutions, for example DynamoDB® and AWS S3. DynamoDB is another key-value data store, or NoSQL database, designed to provide low latency, high availability for accessing data sets in a simple and scalable fashion. As the model is serverless pricing is based on the actual usuage rather than having to purchase capability based on expected maxima. However, this is not well suited to storing very large amounts of data due to the implementation, in this instance, requiring that data is not compressed to reduce read times, but consequently increasing the amount of storage needed. It is also very expensive to store large amounts of data on this system compared to other services such as Amazon S3.

S3 overcomes this by providing an object store, which allows larger amounts of data to be stored more cheaply. Whilst this similarly provides a serverless model it sacrifices the low latency of DynamoDB in order to effectively handle the larger data volumes. It also doesn't support transactional based interactions, which DynamoDB does. Users of Amazon's services must therefore decide how their data is likely to be used to determine what kind of storage to use and may need to move data between storage types where usage changes over time. This limits the flexibility and ease of using the data and provides additional overheads in determining storage solutions up-front and, if necessary, transferring data between services.

Various tools have been developed to provide query and analytics functions in large datastores such as those discussed above. Amazon provides various analytics tools such as i. Amazon Athena, providing SQL query functionality within the S3 data storage solution, ii. Amazon Cloud Search allowing a website or application to search uploaded data or iii. EMR which provides scalable data processing capability for various open source tools and is specifically configured to handle big data. Other companies have developed similar suites of analytics tools, such as Google's BigQuery® and Procella® and Microsoft's Azure® HDlnsight and Stream Analytics. These systems generally provide serverless infrastructure which allows scalability, but without the user having to manage the underlying infrastructure themselves. However, such systems are predicated on their integration with specific, complementary systems, such as Athena is intrinsically tied into data stored on S3 and Procella requires the use of Colossus and Borg®. As such the user does not necessarily have control over the specific operations performed on their data or the manner in which processing, scaling, garbage collection or the like is performed, these being packaged together.

A need therefore remains to find a solution to handling Big Data in cloud based applications in a manner which allows maximum searchability across functions, such as data retrieval, analytics and monitoring, whilst providing acceptable latency times and which allow elastic compute provision for each operation or function independently in order to realise the benefits of reduced power consumption, more effective scheduling and resourcing of jobs, the ability to set criteria such as periodicity independently for separate functions, and reduced cost. Furthermore there is a need to provide a solution which separates different functions having different requirements, allowing the user to use the different services, with their various trade-offs, to maximum advantage. For example, in implementing an LSM tree it would be beneficial if the reqired processes, including input of key-value pairs, sorting and writing the input pairs and performing compaction on the resulting files, were separated to provide independent scalability and control. Therefore, embodiments of the present invention are intended to address at least some of the above described problems and desires.

According to a first aspect of the invention there is provided a data handling system for managing data structure in a data store comprising:
a data store for storing sorted data;
a metadata store for storing status information associated with the sorted data;
at least one job creator comprising at least one job definition queue, the job creator being configured to review the metadata store for status information satisfying a predetermined criteria, wherein on satisfying such a predetermined update criteria subsequently creating a job to be executed, and allocating the job to the at least one job definition queue; and
a compute resource service module configured to enable job execution of the allocated job so as to modify data structure in the data store, the job execution capability of the data handling system being scalable in dependence upon the number of allocated jobs to be executed.

The job creator may be configured to assign jobs to be executed to a predetermined job definition queue in dependence upon a computational operation to be undertaken. Thus the or each job queue may only hold jobs related to a specified operation, such as garbage collection, compaction jobs, partitioning and the like. This allows such operations to be easily controlled individually. For example the frequency with which the system checks for new jobs may be different for different operations, different scaling criteria may be set for different jobs depending on acceptable latency or urgency. Different priorities may be set, or one job queue may be prioritised over another queue according to specified criteria. Other criteria and parameters which can be individually controlled for each job queue will be apparent to the skilled addressee.

The data store may comprise a first set of store management criteria and the metadata store may comprise a second set of store management criteria. The second set of store management criteria is separate and distinct to the first set of store management criteria such that favourable criteria may be applied to the metadata set that is periodically and consistently queried for jobs to be undertaken. For example the metadata may be stored in an uncompressed format to reduce read latency whereas the data store may use compression to reduce file size and memory requirements. Similarly the data in the data store may be immutable, files being updated by writing a new file sequentially, allowing versioning and quicker write times, whereas the metadata store may support transactions and atomic updates, ensuring the most recent version of the data is always retrieved. In this way it is possible to fully realise both the benefits of storage solutions aimed at holding large volumes of data for the data store and storage solutions enabling low latency, flexible access to data in the metadata store. The service costs associated with these two data stores may also differ to the benefit of a user, for example a service providing cheap storage for large volumes of data may be selected for the data store, this being less important for the metadata store for which transactional cost is of greater concern. Regular function checks, for example using a function-as-a-service such as Amazon's Lambda®, may be implemented on the metadata store.

The data handling system may provide a single job definition queue per predetermined update criteria to be executed. Further, a job queue may be associated with a single computational operation to be undertaken. Where there are multiple computational operations to be undertaken, there may be provided a single job queue for each computational operation. This provides the advantage that each computational operation is handled separately and thus can be individually scalable, such as scaling compute entirely independently for each operation to be undertaken, defining different periodicities with which to trigger functions controlling the operations and the like.

The review of the metadata store may be triggered periodically by a function scheduler. This may comprise scanning of the metadata store for status information satisfying a predetermined criteria. Multiple function generators may be provided for different job definition queues, or to provide for different periodical checks. The function may be considered as a data processing trigger for any data update to be implemented.

The data handling system may comprise a first job definition queue and at least a second job definition queue. The first job defintion queue may hold compaction jobs and in an embodiment of the invention the second job queue may hold garbage collection jobs. As noted above this allows for the different operations of compaction and garbage collection to be managed independently of one another.

Jobs may be assigned to a third job definition queue prior to being added to the second job definition queue. The third job definition queue may have a timeout function, such that jobs which have been held in the third job definition queue for a predetermined amount of time are automatically moved to the second job definition queue. This may be advantageous where a time delay is required, such as when marking files ready for garbage collection to ensure that the file is not still in use, or any relevant queries have finished executing before intiating garbage collection.

A fourth job definition queue may comprise a partitioning job queue. Thus partitioning work may similarly be independently scalable and controllable.

The trigger for adding the job to the fourth job definition queue may be dependent on the number of lines in a leaf partition in the file store exceeding a predetermined threshold value. In an alternative embodiment of the invention the partitioning job definition queue may be implemented as the second job definition queue.

It is to be understood that the above are examples, and the invention may include any combination of job definition queues as described above, or as would be obvious to the skilled addressee. Advantageously each job definition queue is separate, having it's own predetermined critreria which enables the system to identify new jobs on reviewing the metadata store and allocate them to the appropriate queue.

For each job definition queue the compute resource module may allocate a container to execute a status information update in the job definition queue. A function may periodically check the number of allocated jobs in the queue and, where the number of jobs exceeds the number of available containers, the compute resource may generate additional containers to meet the required demand. Thus the compute resource service automatically scales the compute available for each computational operation. This may be up to a predefined maximum number of containers, either per job definition queue or across the service as a whole so that the user can effectively manage the total resource and associated cost which may be employed and may also optionally manage the cost, total resource and prioritisation of each computational operation by managing the individual job definition queues and associated allocation of compute resource.

On completing a job the container may request another allocated job from the job definition queue and, if there is none available, the container may terminate. Alternitively it may sleep for a predetermined amount of time before requesting a job again. If there is still nothing in the job definition queue the container may then automatically terminate. Thus the system is able to automatically scale down when demand is low as well as scaling up when demand is high to provide an elastic compute solution.

The user may write new data directly to the file store.

Beneficially, the metadata store may be configured to support transactions and/or atomic updates.

The data handling system may be serverless, providing the advantages of reserving resources only when required, these being free for other users when not required.

The data handling system may be configured to maintain a log structured merged (LSM) tree.

In another aspect of the invention there comprises a method of managing data structures in a data store using a data handling system comprising a sorted data store and a metadata store for storing status information associated with the sorted data in the data store, the method comprising the steps of:
a. managing, by a job creator, at least one job definition queue, so as to review the metadata store for status information satisfying a predetermined criteria to create jobs to be executed;
b. subsequently allocating a job to the at least one job definition queue; and
c. executing, by a compute resource management module, the allocated jobs so as to modify data structure in the sorted data store, wherein an allocated job execution capability of the compute resource service is scalable in dependence upon the number of jobs to be executed.

The method may further comprise implementing a single job definition queue per predetermined update criteria to be executed.

Reviewing the metadata store may be periodically triggered by a function.

The method may further comprise allocating jobs to be executed to a predetermined job definition queue in dependence upon the computational operation to be undertaken.

The method may further comprise managing a first job definition queue and at least one second job definition queue using a job creator, wherein allocated jobs in the first queue relate to a first computational operation and allocated jobs in the at least one second queue relate to a second computational operation.

The method may further comprise scalably provisioning compute resource to perform the allocated jobs held in the first and at least one second job definition queue by at least one compute resource service module, such that compute resource assigned to each job definition queue are separately scalable. As such the first job definition queue and at least one further job definition queue may be considered to be mutually exclusive to each other.

The method may further comprise sorting the data prior to storing the data.

The method may further comprise the steps of:
d. identifying partition information from the metadata store;
e. sorting and/or partitioning new data in accordance with the partition information; and
f. writing the new data to the data store.

The method may further comprise periodically comparing the number of allocated jobs in the at least one job definition queue to the number of available containers, and subsequently allocating a container per job. In the case that the number of jobs exceeds the number of containers, the method may further comprise generating additional containers for the job definition queue to meet the required demand up to a predefined maximum number of containers.

On a container completing a job the method may further comprise the container requesting another allocated job from the job definition queue and, if there is none, the container may sleep for a predetermined period of time and then request an allocated job again. The container may terminate if there is still nothing in the job definition queue after the predetermined time, allowing the system to automatically scale down when demand is low. Alternatively, where the container receives the response that there is no job in the job definition queue the container may terminate immediately, rather than sleeping, allowing compute resource to be released more quickly. The benefits of ensuring some hysteresis in the system against the benefits of quickly scaling down where compute resource is no longer required will be apparent to the skilled addressee and will not be discussed in further detail herein. Providing the opportunity to terminate containers created for a particular job queue when that job queue is empty provides scalability, ensuring that costs, power consumption and the like are kept to a minimum.

Steps (a)-(c) above may be performed concurrently with or subsequently to steps (d)-(f).

The data store may be a key-value data store, and the data may be sorted accordingly prior to being written to the data store. The data may be globally or locally sorted.

In another aspect of the invention there is provided a cloud infrastructure optimisation system comprising a processor and a memory in communication with the processor, the memory configured to store instruction that, when executed by the processor, cause the processor to perfom the method described above.

Whilst the invention has been described above it extends to any inventive combination of the features set out above, or in the following description, drawings or claims, within the scope of the appended claims. For example, any features described in relation to any one aspect of the invention is understood to be disclosed also in relation to any other aspect of the invention.

The invention will now be described, by way of example only, with reference to the accompanying drawings, in which:-
Figure 1 shows a system in accordance with an embodiment of the invention.
Figure 2 shows a process of performing compaction jobs in accordance with an embodiment of the invention.
Figure 3 shows a process of performing garbage collection in accordance with an embodiment of the invention.
Figure 4 shows an alternative process of performing garbage collection in accordance with an embodiment of the invention.
Figure 5 shows a process of performing partitioning in accordance with an embodiment of the invention.
In the Figures like elements are denoted by like reference numerals.

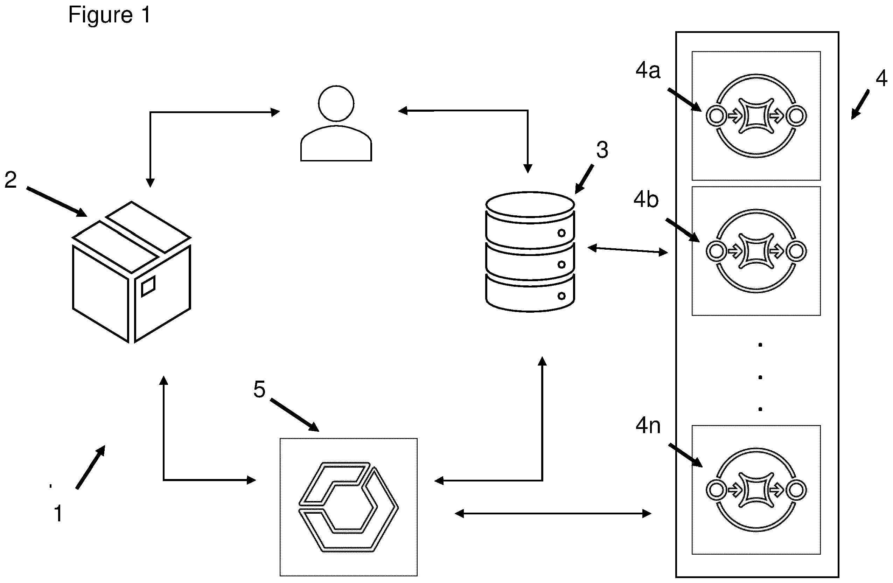

Referring to Figure 1, there is provided a data handling system 1 for managing data structure in a data store 2. The data handling system comprises a data store 2 for storing sorted data and a metadata store 3 for storing status information associated with the sorted data. The data is sorted locally e.g. within partitions. The data store is a simple storage system, such as a file store or an object store configured to store large amounts of data cheaply. The file store 2 must be able to handle very large amounts of unstructured data, often Petabytes of data, which can be stored in shards, tablets or buckets as is known. Data can be stored in a single data centre, or multiple data centres. The data centres are located in specific regions to allow for faster access where specific data is required, or there can be no geographic limitations on where the data is stored. Replication can be implemented as required for backup, accessibility and any other requirements.

The file store 2 can be a commercial service such as Google's Colossus® or Amazon's S3®, or a private data store. Whilst such stores are not necessarily well placed to handle continuous or predictable low latency reqests, such an object store can handle bursts or spikes in read requests and scale quickly and easily. Data stored in the file store 2 would usually be compressed, which has the advantage of reducing storage requirements and therefore resources, power requirements and cost of running the data handling system. The data may be immutable. The file store may be optimised to store large volumes of data, rather than to handle continuous or high levels of queries or edits by multiple users.

Metadata, including status information, associated with the data in the data store is stored separately in a metadata store 3. This includes any information associated with the data and which gives additional information of use to the system or the user. For example the metadata includes information regarding date of creation, original author, filename, status and partition information (discussed in more detail below), for example name of partition, minimum key, maximum key, number of lines, parent and child partitions. The status information can also include file information including, minimum, maximum, number of lines, job ID and status (e.g. active, ready for garbage collection, garbage collected) which is used by functions to add jobs to a job definition queue as described below. The skilled addressee will appreciate that other information can be stored as status information, such as information regarding bloom filters of the keys to allow quick determination as to whether a query key is present in the data.

The status information defines the status of the data held in the data store and includes information required by the system to, for example, determine the current partition information required to write data to the data store, the number and size of active files to determine whether compaction or partitioning jobs should be run, and identify files which are ready for garbage collection. Other necessary and useful status information will be apparent to the skilled addressee.

As with the data store, the metadata store 3 can be a commercially available product such as Amazon's DynamoDB®, or may be a private or proprietory system. This may be a relational database, or NoSQL database. A key feature of the metadata store 3 is its ability to support transactions and allow atomic updates. The status information need not be compressed, which can improve read latency where required. However, the metadata store need not be optimised to handle very large volumes of data, for example a more expensive storage solution may be used for the metadata store, since relatively little data will be stored there, as compared to the storage solution used for the data store. Thus the choice of storage solution for the metadata store 3 and data store 2 is based on different technical and economic requirements. For example resilience of the metadata store is likely to be important, since loss of status information will make it difficult to retrieve and manage the data in the data store. However the user could be willing to tolerate some data loss in the data itself. Therefore a more robust system, or more comprehensive backup and restoration plans can be put in place for the metadata store than for the data store. Separating the metadata and sorted data in this way allows the user finer control over the requirements for each.

Storing the status information in a separate metadata store allows for atomic updates, such as when replacing two files with a merged file. This also allows a user to quickly determine the state of the system, for example when writing data so that they can sort and partition their data accordingly, which is of particular use in a big scale multi-user system.

A job creator 4 comprising at least one job definition queue is provided. In this embodiment the job creator 4 holds multiple job definition queues 4a-4n. It has two main functions i. review the metadata store for status information satisfying a predetermined criteria to create a job to be executed; and ii. send the job to a job definition queue. The job creator 4 is configured such that it has no permanent storage, or minimal storage required to hold the predetermined criteria. Jobs are held in transitory memory for the purposes of processing by a compute resource manager module 5. The compute resource manager 5 is configured to enable job execution of the updates so as to modify data structure in the data store. The job execution capability of the data handling system is scalable in dependence upon the number of jobs to be executed, as described in more detail below.

Jobs are processed by the compute resource manager module 5 which, as with the storage solutions, is either a bespoke service or an off-the-shelf commercial container management service such as Amazon's ECS® or the Google Kubernetes® Engine. This service is arranged to pull job definitions from the job definition queues 4a-4n, managing the compute resources to execute the job and update the data stores 2, 3 accordingly, as is known in the art. Jobs can be held as a text file, for example job type: compaction job; input files: file 1, file 10, file 19; output file: file 100. In such an example the containers look at the 'job type' field and retrieve the appropriate code to execute, using the text from the other fields to configure the code.

As with the job creator 4 the compute resource management service module is a single service managing the processing of all of the different operations to be performed by the system, or separate services can be provided for each of the operations, that is to say each job definition queue can be arranged to have a dedicated compute resource manager 5 within the compute resource management module. In either embodiment the resource manager 5 is advantageously able to scale for each job definition queue 4a-4n independently, as described below.

The job creator 4 and the compute resource manager 5 are linked by functions which will periodically trigger the review of the metadata store 3 to check for jobs which need to be added to the job definition queue, create tasks at the compute resource manager in order to pull the allocated jobs from the job definition queue and to look for files that need garbage collecting. The functionality is provided by a Function as a Servcie (FaaS) package such as Google App Service, AWS Lambda or OpenWhisk, or a bespoke capability may be provided.

The job creator 4 provides a simple queuing service which allows for messages to be added to the queue and pulled from the queue. Messages reappear in the queue after a specified amount of time unless explicitly deleted. If the messages are still being processed extend requests are sent to prevent them reappearing in the queue before processing has finished.

Each computational operation may have a separate queue 4a-4n. It is therefore possible to separately provision each job definition queue depending on the functionality of the queue to optimise each computational operation individually. For example, as described below, different functions can be used to trigger review of the metadata store for each computation operation, thus allowing parameters such as the frequency with which relevant jobs are checked for and the predetermined critreia that the job creator scans for to be managed independently. This gives the user more control over the way their data is handled and the ability to optimise the system according to their particular requirements. Scaling is also managed for each computational operation independently, each job definition queue being provisioned independently by the compute resource service. Thus the user can similarly set different parameters, priorities or maximum resource thresholds individually for each function if they so choose. It is possible for the system to have default parameters and requirements for each job definition queue initially, which can be set to be identical or set according to an average or 'best guess' set-up, to provide ease of use for the user in the first instance. The user can then adjust parameters if they so wish. Alternatively the user can specify the relevant parameters for each function on setup of the system.

The data in the data store is sorted by key-value pairs, and the key space is range-partitioned, as discussed below. In order to write data to the data store a write client can find out current partitions by querying the status information held in metadata store 3 and sort and partition the data accordingly. The sorted files can then be uploaded, one or more files per leaf partition. The fewer files per partition the better, since a higher number of files per partition increases read time. Ideally one per leaf partition is preferred. Fewer files reduces the I/O costs, with the trade-off that the larger the files, the longer before they are written and therefore the higher the latency before they are available.

Data is written to a local file and locally sorted by partition and key. In such an example a specified number of lines are read into memory, sorted and appended to the local file. This is repeated until the local file reaches a maximum size at which state the data in the local file is locally sorted by partition and key, but not necessarily globally sorted. For each partition of data the local file is filtered for data in that partition, and then sorted in memory. Due to the local sorting, filtering the local file for that data does not necessarily require reading the entire file, if an appropriate file type is used. The sorted, in memory data for the partition is then written into the data store 2. Once the data has been written the metadata store 3 is updated accordingly.

Other methods of data ingress may be used, within the scope of this invention, such as running MapReduce jobs or using Apache Spark®. In any event the information allowing sorting and partitioning the data to be written in accordance with the current state of the system is obtained from the metadata store 3, which must be updated once files have been written to the file store 2.

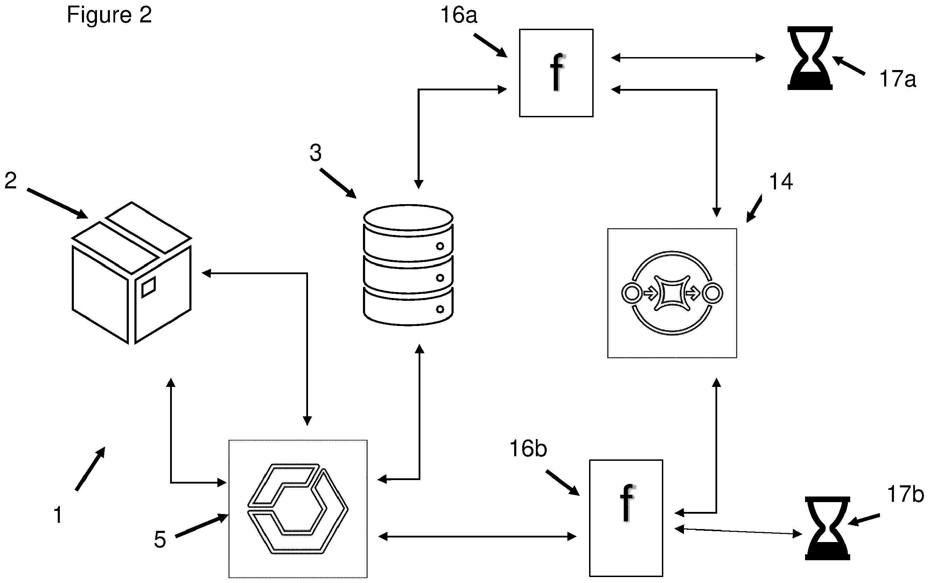

Turning now to Figure 2, a method will be described of performing compaction according to one embodiment of the invention. A function 16a is triggered at regular intervals, for example every N minutes, to query the metadata store 3 for all files satisfying a predetermined criteria. For example the query relates to all active files (all files which are not marked for garbage collection) which do not have a job ID. These files are then grouped by partition. If the files in a partition match a certain criteria, for example there are more than a certain number of files, then a compaction job is created to merge those files. If the partition is a leaf partition then the job may simply perform a sort-merge job to merge the N sorted files into one sorted file. If the partition is not a leaf partition then the job may merge files and write two or more output files, one for each of the child partitions. Separate job definition queues can be provided such that leaf partitions and non-leaf partitions are handled independently, or there may be a single job definition queue for all compaction jobs.

In this embodiment if the file is a leaf partition the function creates merge job definitions for groups of M files, e.g. for groups of 11 files. These definitions are posted to the job definition queue 14, which is one of the multiple job definition queues 4a-4n shown in figure 1. If the file is a non-leaf partition file a splitting merge job definition is created for whatever files are there and these job definitions are posted to the job definition queue 14 (or alternatively, as noted above, a separate job queue, not shown). A second function 16b is triggered periodically to pull jobs from the job definition queue 14 to the compute resource manager 5 to perform the compaction.

In one embodiment of the invention this is used to run the LSM algorithm, wherein the combination of features implements a log-structured merge tree and the M sorted files are merged into one sorted file.

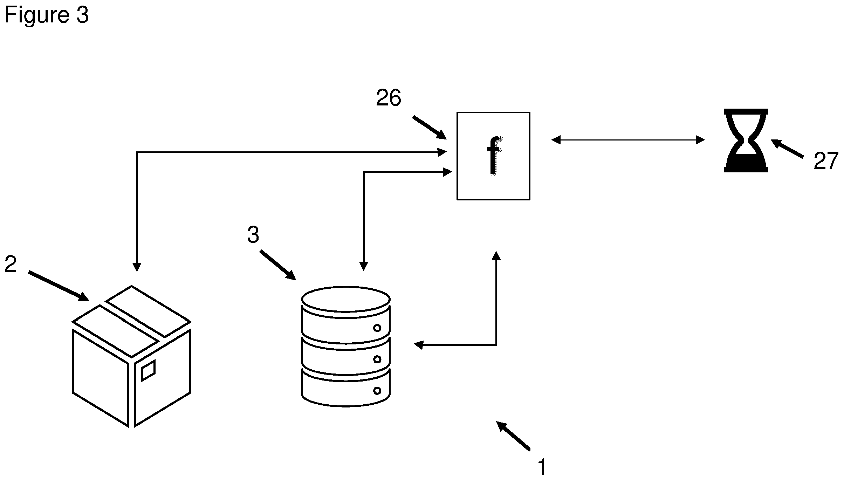

Next, turning to Figure 3 a method for performing garbage collection in accordance with an embodiment of the invention is described.

Periodically, for example every 10 minutes, the metadata store 3 is queried for all files marked as ready for garbage collection. This is undertaken by a separate function 26 to the function that scans for compaction jobs. The files marked for garbage collection are deleted from the file store 2 and the metadata store 3 is updated. Since this requires very little compute there is no need to create jobs and add them to a job definition queue.

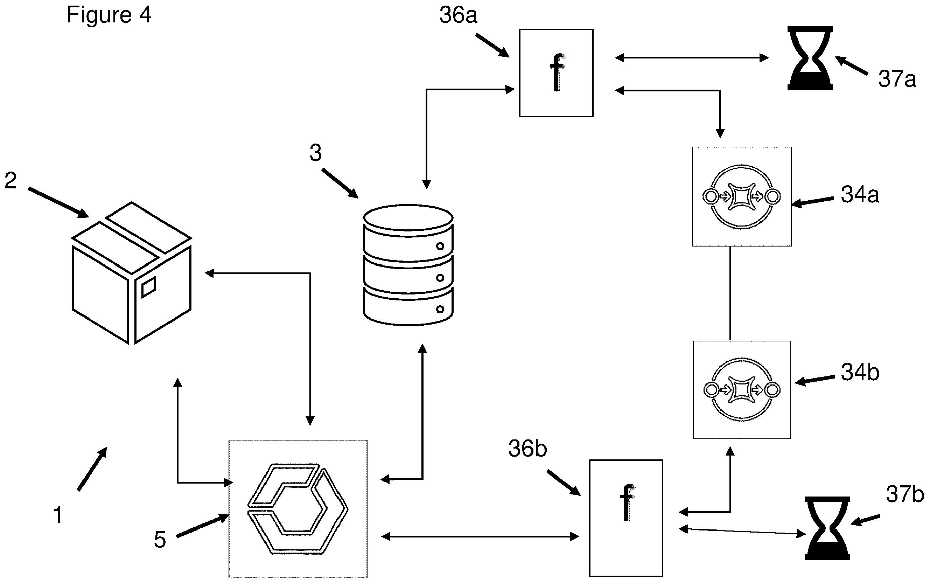

Alternatively, as shown in Figure 4, it is preferred to add garbage collection jobs to another job definition queue to ensure that garbage collection is scalable in the same way as compaction. This also provides for easy implementation of additional features such as a delay in deletion to ensure files which are being used for queries are not prematurely deleted. In the example in figure 4 files are marked as ready for garbage collection and added to job definition queue 34a by a function 36a which is triggered periodically. This job definition queue is similar to the compaction job definition queue described above, although it is noted that a separate queue is provided and compute is assigned independently by the compute resource management service 5. In this figure the compute resource management service 5 is depicted as the same service provided to provision compaction jobs previously, a single service provisioning each queue independently. However it is to be understood that separate compute resource management services may be provided for each job definition queue.

In this example jobs are not pulled from job queue 34a. Instead this queue has a timeout and when jobs have been in the queue for longer than the timeout they are moved to dead-letter queue 34b. A function 36b is then configured to pull messages off the dead-letter queue 34b for execution at the compute resource manager 5. The files are deleted from the data store 2 and the metadata store 3 is updated accordingly. Because a separate queue holds the garbage collection jobs this can be scaled independently of the compaction work, as discussed below.

The jobs in the job definition queues 4a-4n may be executed in multiple containers, managed by the compute resource manager 5. Each container is assigned to a particular job definition queue and pulls an allocated job from the job definition queue, executes the job, deletes the message and asks for the next job. Whilst processing the job the container may periodically send an extend message visibility delay to avoid the message reappearing on the job definition queue whilst the message is still being processed. When execution has completed the metadata store 3 is updated. This process repeats until there are no more messages in the queue to which the container is assigned, at which point the container terminates. In this way, for each job definition queue, the compute resource available is scaled down at times of low demand.

In an embodiment, in order to provide additional compute during peaks in traffic a function may check the number of messages in each job definition queue periodically. If it is determined that there are messages which are not in-flight on one of the queues and the number of containers already running is below a threshold or predetermined maximum value, new containers are created and assigned to that queue. This then provides available containers which can be assigned to the allocated jobs. One new container may be created for each message not in-flight in the queue, up to a preconfigured maximum number of containers. As each container is assigned to a specific job definition queue, each operation is scaled up and down independently of the others.

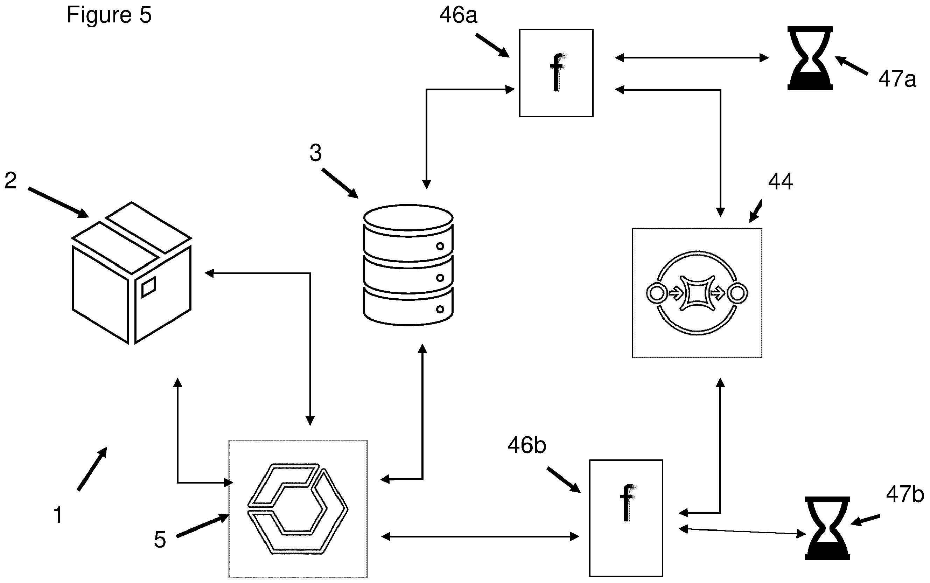

In an embodiment the number of lines in each leaf partition is calculated on a periodic basis, for example every N minutes. If this is greater than a threshold then the partition is split into two new child partitions, for example the mid-point of the parent partition being the maximum of a left child and minimum of a right child. Alternatively, another way of calculating the midpoint of a partition comprises for n key-values in the partition, reading through them in order until the *n*/*2* entry is read and using that as the split point. Another example would be to store a quantiles sketch of the keys with each file, determining a split point comprising reading all the sketches in, merging them and extracting a median. Where minimal compute is required, for example just taking the mid-point of the parent partition, this may be executed on determining the threshold is exceeded in a similar manner to the garbage collection embodiment described with refernce to Figure 3. For other methods more even partitions can be created using methods to identify the true mid point of the data rather than assuming an even spread, but this would require increased compute to execute. Therefore, for such examples a job could be added to a partition splitting job definition queue 44 as shown in Figure 5. It is noted this looks similar to other operations, resource being assigned to the job definition queue in a scalable manner. Thus as with the other job definition queues the metadata store 3 is periodically scanned for status information matching the predetermined criteria, such as for the example above a partition having a number of lines greater than the set threshold, which need to be added by job definition queue 44. This may be perfomed by a function 46a periodically triggered by a timer or monitor service 47a. A second function 46b, similarly triggered by a second timer or monitor service 47b may periodically determine the number of allocated jobs in the job definition queue, passing this information to the compute resource manager to provide additional compute resource if necessary, as described above. Thus, separate job definition queues are used for each operation so that each is individually managed by the resource manager. Furthermore, by separating the operations to be perfomed into separate job definition queues the system can operate more efficiently, provisioning each operation as required to provide additional scalability and flexibility within the system.

In this embodiment, once the partition splitting work has been completed a transaction is created to update the metadata store 3, wherein two child partitions are added and the parent partition is updated to be a non-leaf partition. This is conditional on the parent partition still being marked as a leaf partition. Thus the metadata store 3 is updated to reflect the changes in the file store.

The partition splitting function has concurrency 1 to avoid clashes, but a conditional check can be implemented to ensure no concurrent modifications during this process. Splitting a partition does not immediately affect the data, so that clients may still read from and write to the old partitions and any old compaction jobs in the old partitions will still run. Any new compaction jobs will then be splitting merge jobs. Asymptotically all data ends up in leaf partitions.

It will be appreciated that other operations could be performed in the manner described above, providing a separate job definition queue for each operation. The system is not limited to any one type of operation, although beneficially for many systems at least compaction and garbage collection operations would be required to provide an update to sorted data in the data store. The essential element is that the job creator 4 checks the metadata store 3 for status information satisfying a predetermined criteria, creating a job where this criteria is satisfied and assigning the job to the relevant job definition queue. In this manner any additional functionality is easily implemented in a scalable manner, providing a separate predetermined criteria to specify jobs to be added to a separate job definition queue in the job creator 4. As described with respect to the second garbage collection embodiment it is possible to add additional job definition queues to provide delayed action or other functionality without departing from the scope of the invention, as defined in the claims. Similarly the system is not limited to the type or volume of data to be stored and processed, although it is envisaged that it will find most use in Big Data applications being accessed by large numbers of users.

As described the ability for the task type to be queried and allocated a specific queue on completion of the query provides for the ability for compute resource to be appropriately provided. In the case that a first and second job queue are provided in relation to a first and second compute operation to be performed, such compute and storage are independently scalable and different operations to be performed on the data are also independently scalable. It is envisaged that the compute resource can be configured to be prioritised for a given period, job or user, for example prioritising compactions over ingest or other jobs, as required by the user. The system can look at the status across all the partitions and then make a decision about what jobs to do and what order they should be done in, prioritising job definition queues or putting jobs for partitions with lots of files onto the queue first so that they get done first, for example. Because the status information for all the data held in the system is stored together in the metadata store any functions have access to the metadata for the whole system, not just the partitions assigned to a particular server as in previous systems. Thus decisions made, for example with regard to partitioning, can take account of the state of the whole system rather than being restricted to a subset of the system visible to a particular server. This provides maximum flexibility in the system, individually manageable functions and a more efficient system whereby redundant compute can be terminated, decreasing power and processing requirements and cost.

Alternative embodiments will be apparent to the person skilled in the art within the scope of the claims as set out below.

Various modifications to the principles described above would suggest themselves to the skilled addressee. For example, the embodiment of the invention describes that the data is stored locally, however in an alternative embodiment the data may instead be stored globally.

Alternatively, instead of being a simple file store, the metadata store could equally be another type of file store 2 having more a complex structure.

In the example given above the job creator 4 holds multiple job queues 4a-4n. It is to be understood that the job creator 4 may be a single component configured to hold multiple queues or each queue may be held on a separate job creator. The skilled addressee will further appreciate that aspects of the invention may function as described where the job creator 4 comprises a single job queue.

The job creator may manage the job queues according to the predetermined criteria. For example in the case of a partitioning job definition queue, the job creator may scan the metadata store for all status information indicating that a partition has exceeded a threshold size, and create partition job definitions for each partition meeting that criteria. The job creator may then order the job defintions, for example by size, assigning the largest files first such that these are picked up by the compute resource manager first, thus prioritising the jobs. The job creator may order the job definitions based on the predetermined criteria, or any other critieria specified by the user.

Other embodiments are contemplated where compaction jobs can be used to maintain data structures, such as to keep a compressed sparse row (CSR) representation of a graph or matrix up-to-date. As this representation is ordered then merging two representations is simple and fits naturally into the compaction process. CSR is not normally thought of as an updateable format, but the approach herein disclosed makes it so.

Rather than just a single resource manager being implemented a series of dedicated resource manager with an oversight module may be implemented.

In another alternative embodiment, instead of terminating a container when there are no remaining jobs in the job definition queue the container may sleep for a predetermined amount of time. After this time the container requests a job for the job queue again, terminating if there are still no jobs. This provides some hysteresis to the system such that containers are not continuously dropped and recreated.

Whilst the architecture for the present invention may utilise existing cloud architecture it will be appreciated by the reader that, whilst such individual services are known in the art as acknowledged above, the combination of different storage solutions for metadata and data storage and the provision of separate, scalable compute for the operations to be performed is new to the data handling system of the current application. By providing for a way for the job queue manager to distinguish different functions by allowing only jobs which meet a predetermined criteria to be added to each job queue the present invention provides a simple but effective way to separate out the different functions, allowing individual control, scalability and visibility which was not previously possible. The system provides for a new way of perfoming log structured merge,or other similar functions in a manner that allows concurrent operations on the data, with acceptable latency and high reliability. By providing a way of storing metadata separately the present invention realises the various advantages of different types of storage solution in a single system to provide a more efficient cloud storage solution as a whole. Linking such known storage elements and compute elements in a new way provides for more efficient way of storing and processing large amounts of data which was not previously possible, enabling the user to quickly and easily retrieve all data relating to a particular key, for example, and to have control over the operations of the system, rather than having to decide on the required functionality in advance and select an appropriate storage solution, or using separate analytics programs which each require different data set-ups to be effective. Further the system provides complete knowledge of the state of the system for performing jobs such as partitioning jobs, which was not previously possible where partitions were assigned to particular servers, enabling improvements to the efficiency of the system as a whole. The system provides for a way to provide serverless compute solutions at a functional level and allows users to determine how their data is handled and have finer control without having to provide bespoke systems for each user or provide different service solutions for different use cases. Thus data, analytics and maintenance functions can be supported by the present solution using any combination of storage services as discussed above, the advantages being realised in the means by which required updates are identified in the metadata store and handled by the job creator.

Further asects and preferred features of the present invention are set out in the following numbered clauses, which may be provided independently, or in combibnation with the aspects and features of the invention set out above and/or defined by the the claims:
1. A data handling system for managing a data structure in a data store comprising:
   a data store for storing sorted data;
   a metadata store for storing status information associated with the sorted data;
   at least one job creator comprising at least one job definition queue, the job creator being configured to review the metadata store for status information satisfying a predetermined criteria, wherein on satisfying such a predetermined criteria subsequently creating a job to be executed, and allocating the job to the at least one job definition queue; and
   a compute resource service module configured to enable job execution of the allocated job so as to modify data structure in the data store, the job execution capability of the data handling system being scalable in dependence upon the number of allocated jobs to be executed,
   wherein at least one job definition queue comprises a partitioning job definition queue.
2. A system according to clause 1, wherein the predetermined criteria for adding the job to the partitioning job definition queue is dependent upon the number of lines in a leaf partition in the file store exceeding a predetermined threshold value.
3. A system according to any preceding clause, wherein for the or each job definition queue, the compute resource service module is configured to allocate a container to execute a allocated job in the job definition queue.
4. A system according to clause 3, wherein at least one function generator is provided per job definition queue, for periodically checking the number of allocated jobs in the respective job definition queue and the compute service manager module is configured to compare the number of allocated jobs in the job definition queue to the number of available containers, and to allocate a container per allocated job.
5. A system according to clause 4, wherein in the case that the number of allocated jobs in the job definition queue exceeds the number of available containers, the compute service is configured to generate additional containers to meet the required demand.
6. A system according to clause 5, wherein the number of containers generated cannot exceed a predefined maximum number of containers.
7. A system according to any preceding clause, wherein the system is configured to maintain a log structured merge tree.
8. A system according to any of clauses 1 to 7, wherein the status information comprises a compressed sparse row representation of a graph or matrix and keeping the compressed sparse row representation of the graph or matrix up to date comprises generating, at the job creator, a job definition indicating a compaction job to maintain the data structure.
9. A system as defined in any preceeding clause, wherein the system comprises a serverless system.
10. A system according to any preceding clause, wherein the job creator is configured to prioritise allocated jobs in dependence upon a predetermined job definition queue prioritisation criteria.
11.A system according to any preceding clause, wherein the job creator is configured to prioritise allocated jobs in a given definition job queue by ordering the allocated jobs in the job definition queue according to the predetermined criteria or additional predetermined criteria.
12. A method of managing data structure in a data store using a data handling system comprising a sorted data store and a metadata store for storing status information associated with the sorted data in the data store, the method comprising the steps of:
   managing, by a job creator comprising at least one job definition queue, so as to review the metadata store for status information satisfying a predetermined criteria to create jobs to be executed;
   subsequently allocating a job to be executed to the at least one job definition queue; and
   executing by a compute resource management module the allocated jobs so as to modify data structure in the sorted data store, wherein an allocated job execution capability of the compute resource service is scalable in dependence upon the number of jobs to be executed,
   further comprising managing at least a first job definition queue and at least one second job definition queue using the job creator, wherein allocated jobs in the first job definition queue relate to a first computational operation and allocated jobs in the at least one second job definition queue relate to a second computational operation.
13. A method according to clause 12, further comprising scalably provisioning compute resource to perform the allocated jobs held in the first job definition queue and at least a second job definition queue by at least one compute service module, such that compute resource is assigned to each job definition queue separately.
14. A method according to clauses 12 or 13, further comprising the steps of:
   identifying partition information from the metadata store;
   sorting new data in accordance with the partition information; and
   writing the new data to the file store.
15. A method according to any of clauses 12 to 14, further comprising provisioning, by the compute resource service module, available containers to receive and execute jobs from the at least one job definition queue.
16. A method according to clause 15, further comprising periodically determining the number of jobs in the job definition queue and, in the case that the number of jobs exceeds the number of available containers, generating additional containers for the job definition queue to meet the required demand.
17. A method according to clause 16, wherein containers cease to be generated when a predefined maximum number threshold is attained.
18. A method according to any of clauses 12 to 17, wherein the or one of the job definition queues is a compaction job definition queue for holding only compaction jobs, wherein the compaction jobs comprise merging M sorted files into one sorted file.
19. A method according to clause 18 wherein the status information comprises a compressed sparse row representation of a graph and the compaction jobs comprise updating the representation.
20. A method according to any of clauses 12 to 19 wherein the or one of the job definition queues is a garbage collection job definition queue for holding only garbage collection jobs.
21.A method according to any of clauses 12 to 20 wherein, prior to adding jobs to the at least one job definition queue the job creator sorts the allocated jobs according to the predetermined criteria and/or additional predetermined criteria.

## Claims

1. A data handling system for managing a data structure in a data store comprising:
a data store for storing sorted data;
a metadata store for storing status information associated with the sorted data;
at least one job creator comprising at least one job definition queue, the job creator being configured to review the metadata store for status information satisfying a predetermined criteria,
wherein on satisfying such a predetermined criteria subsequently creating a job to be executed, and allocating the job to the at least one job definition queue; and
a compute resource service module configured to enable job execution of the allocated job so as to modify data structure in the data store, the job execution capability of the data handling system being scalable in dependence upon the number of allocated jobs to be executed.

2. A data handling system according to claim 1, wherein multiple predetermined criteria are specified, each predetermined criteria being specific to a computational operation to be undertaken.

3. A data handling system according to any preceding claim, wherein there is provided a single job definition queue per predetermined criteria to be executed.

4. A data handling system according to any preceding claim, the data store comprising a first set of store management criteria and the metadata store comprising a second set of store management criteria.

5. A data handling system according to any preceding claim, wherein the job creator comprises at least one function generator configured to periodically trigger the review of the metadata store.

6. A data handling system according to any preceding claim, wherein the at least one job creator is configured to manage at least a first job definition queue and at least a second job definition queue, allocated jobs in the first job definition queue relating to a first computational operation and allocated jobs in the at least one second job definition queue relating to a second computational operation.

7. A data handling system according to claim 6, wherein the at least one compute resource service is configured to scalably provision compute resource to perform the status information updates held in the first job definition queue and at least one second job definition queue, wherein compute resource assigned to each job definition queue are separately scalable.

8. A data handling system according to any preceding claim, wherein at least one job definition queue is a compaction job definition queue.

9. A data handling system according to any preceding claim, wherein at least one job definition queue is a garbage collection job definition queue.

10. A data handling system according to claim 9, comprising a further job definition queue, wherein prior to being added to the garbage collection job definition queue, status information updates are held in the further job definition queue.

11. A data handling system according to claim 10 wherein the further job definition queue has a timeout function, such that status information updates which have been held in the further job definition queue for longer than a predetermined timeout threshold value are automatically moved to the garbage collection job definition queue.

12. A method of managing data structure in a data store using a data handling system comprising a sorted data store and a metadata store for storing status information associated with the sorted data in the data store, the method comprising the steps of:
managing, by a job creator comprising at least one job definition queue, so as to review the metadata store for status information satisfying a predetermined criteria to create jobs to be executed; subsequently allocating a job to be executed to the at least one job definition queue; and
executing by a compute resource management module the allocated jobs so as to modify data structure in the sorted data store, wherein an allocated job execution capability of the compute resource service is scalable in dependence upon the number of jobs to be executed.

13. A method according to claim 12, wherein multiple predetermined criteria are specified, each predetermined criteria being specific to a computational operation to be undertaken and further comprising allocating jobs to the at least one job definition queue in dependence upon the computational operation to be undertaken.

14. A method according to claim 12 or claim 13, further comprising implementing a single job definition queue per predetermined criteria.

15. A method according to any of claims 12 to 14, further comprising periodically scanning the metadata store for status information meeting the predetermined criteria.
